# EUROPEAN PATENT SPECIFICATION

(11) **EP 3 532 345 B1**
(45) Date of publication and mention of the grant of the patent: **12.05.2021**
(21) Application number: 17864729.3
(22) Date of filing: 24.10.2017
(51) Int. Cl.: B60R 13/04, B60R 19/02

(54) **A BUMPER ASSEMBLY WITH A PASS-THROUGH TYPE TRIM STRIP**
STOSSDÄMPFERANORDNUNG MIT EINER DURCHGANGSZIERLEISTE
ENSEMBLE PARE-CHOCS MUNI DE BANDE DE GARNITURE TRAVERSANTE

(30) Priority: 27.10.2016 CN 201621179391 U
(43) Date of publication of application: 04.09.2019
(73) Proprietor: Compagnie Plastic Omnium, 69007 Lyon (FR); Yanfeng Plastic Omnium Automotive Exterior Systems Co., Ltd., Shanghai 201805 (CN)
(72) Inventor: SHEN, Shouchen, Shanghai 201805 (CN); FU, Yue, Shanghai 201805 (CN)
(74) Representative: LLR
(86) International application number: PCT/CN2017/107466
(87) International publication number: WO 2018/077161

(56) References cited:
- CN-A- 105 292 033
- CN-A- 105 774 725
- CN-A- 105 774 725
- CN-U- 206 124 934
- DE-A1- 10 249 901
- JP-B2- 3 711 856
- US-B1- 8 480 148

## Description

### Technical Field

The present invention relates to automobile bumpers, and more particularly a bumper assembly with a pass-through type trim strip.

### Background

More and more automobile OEMs start to adopt an appearance design with a pass-through trim strip under a headlight. For bumpers of this type, the following two major problems and conflicts exist:
First, the pass-through trim strip of this type has the property of simultaneously matching in appearance with multiple parts, with very complex matching relationships. Moreover, as a defining characteristic of automobile model of such type, the requirements for appearance matching are relatively high, thus resulting in relatively difficulty matching for pass-through trim strips of this type.
Second, in order to ensure the matching and appearance requirements of a pass-through trim strip, there is generally designed to be a connection structure with a relatively strong stiffness in the middle of the bumper and under a headlight, thus causing the stiffness of those two regions to be usually much higher than bumpers of other types of configuration. In addition, the regions are provided with the pass-through trim strip and the surface of the pass-through trim strip is generally subject to electro-plating, resulting a further increase of the regions' overall stiffness. As a result of these reasons, the region under the headlight of the bumper typically for releasing stresses can not fulfill its role due to the increased stiffness. Hence, when the bumper is subject to a force or undergoes thermal deformation, its stresses are transferred towards the two sides of the bumper, making the bumper prone to prolapse from the sides.

The document US8480148.B1 discloses a vehicle front end assembly including a font bumper 16, an exterior trim 18, and further a grille 26.

The document CN105774725.A discloses a bumper assembly with a pass-through trim strip 1. More particularly, the bumper assembly comprises a bumper 3, an upper grille 2 and a trim strip 1, according to the preamble of claim 1.

### Summary

To solve the aforementioned problem that matching is relatively difficult for pass-through trim strips in the prior art, the invention aims to provide a bumper assembly with a pass-through trim strip.

The bumper assembly with a pass-through trim strip according to the invention is defined by the features of claim 1.

The bumper is provided with a support structure in a headlight region, said support structure being provided with support embossments extending outwardly from a base surface and being shelved upon a headlight.

Middle trim snaps are formed on ends of the middle trim, and an end of, respectively, the left side trim and the right side trim, is provided with a side trim snap, the middle trim snaps engaging with the side trim snap.

The left side trim and the right side trim are, respectively, fixedly connected to the bumper at an end through a screw.

An end region of the bumper comprises a side region and a corner region, wherein, the side region is a free end of the bumper, while the corner region is arranged between the side region and a headlight region, said corner region being configured to be a region with weakened stiffness so as to form a region for stress releasing.

The bumper assembly with a pass-through trim strip further comprises a side bracket that is fixed to the end region through a side bracket mounting structure.

The bumper is provided with a side bracket opening on a flange of the side region adjacent to the corner region, and the side bracket is provided with a snap, the snap engaging with the side bracket opening.

The bumper is provided with a slot on a flange of the corner region adjacent to the headlight region, and the side bracket is provided with a snap, the snap being accommodated in the slot and maintained with a gap from the slot.

The headlight region of the bumper is provided with grooves so as to be configured as a region with reduced stiffness and to form a region for stress releasing.

The headlight region is provided with snap-connection embossments for connecting the headlight, the snap-connection embossments comprising a headlight opening, and a snap of the headlight being maintained with a snap-connection gap from a wall of the headlight opening.

The invention can effectively assure the matching quality under complex matching relationships of a pass-through trim strip, by reuniting the structure of traditional assembly products. In addition, the invention can simultaneously achieve the transfer and control of the region for thermal deformation and stress releasing of a bumper of a pass-through trim strip type, effectively resolving the conflict between stress releasing and the prolapsing of sides for the bumper of this type.

### Description of the Figures

Figure 1 is a schematic view of the overall structure of a bumper with a pass-through trim strip according to a preferred embodiment of the invention;
Figure 2 is a partial, enlarged view of the middle region of the bumper of Figure 1;
Figure 3 is a sectional view along Line A-A of Figure 2;
Figure 4 is a partial, enlarged view of a headlight region of the bumper of Figure 1;
Figure 5 is a sectional view along Line B-B of Figure 4;
Figure 6 is a schematic view of the structure of connection between the middle trim and the right side trim of Figure 1;
Figure 7 is a schematic view of the structure of connection between the bumper and the right side trim of Figure 1;
Figure 8 is a partial, enlarged view of an end region of the bumper of Figure 1;
Figure 9 is a schematic view from another angle of the end region of Figure 8;
Figure 10 is a sectional view along Line C-C of Figure 9;
Figure 11 is a schematic view from yet another angle of the end region of Figure 8;
Figure 12 is a sectional view along Line D-D of Figure 11;
Figure 13 is a schematic view of a headlight region of the bumper of a bumper assembly with a pass-through trim strip according to another preferred embodiment of the invention;
Figure 14 is a partial, enlarged view of the headlight region of Figure 13;
Figure 15 is a sectional view along Line E-E of Figure 14.

### Description of Embodiments

Preferred embodiments of the invention are provided and described in detail below in conjunction with the accompanying figures.

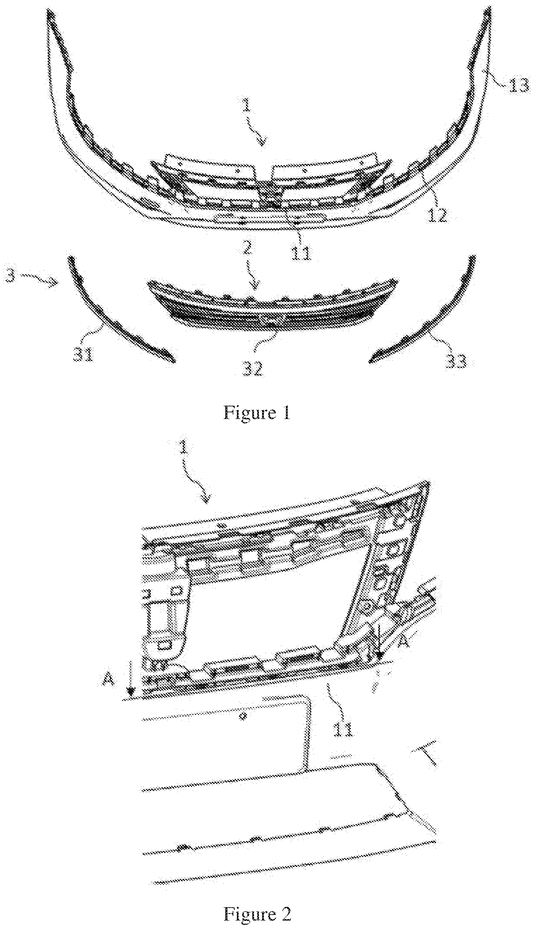

Figure 1 is a schematic view of the overall structure of a bumper assembly with a pass-through trim strip according to the invention, said bumper assembly with a pass-through trim strip comprising a bumper 1, an upper grille 2, and a trim strip 3, wherein, the trim strip 3 constitutes a pass-through trim strip with a left side trim 31, a middle trim 32, and a right side trim 33.

The middle trim 32 of the invention is fixed to the upper grille 2 through a middle trim mounting structure to form an upper grille assembly, thus ensuring that the middle trim 32 is fixed relative to the upper grille 2 without possibility of rotation. In the prior art, the middle trim is generally fixed to the bumper. This way, when the bumper is subject to a turn-over, it will drag the middle trim 32 in rotation with it, enlarging the gap between the middle trim and the upper grille, and forming a relatively obvious opening. The invention can very well avoid an excessive matching gap between the upper grille 2 and the middle trim 32 by fixing the middle trim 32 to the upper grille 2 to form an upper grille assembly.

The left trim 31 and the right side trim 33 of the invention are fixed to the bumper 1 respectively through a side trim mounting structure, while the upper grille assembly is fixed to the bumper 1 through an upper grille mounting structure, thus shortening the dimension matching chain between the middle trim 32 and the side trims (the left side trim 31 and the right side trim 33).

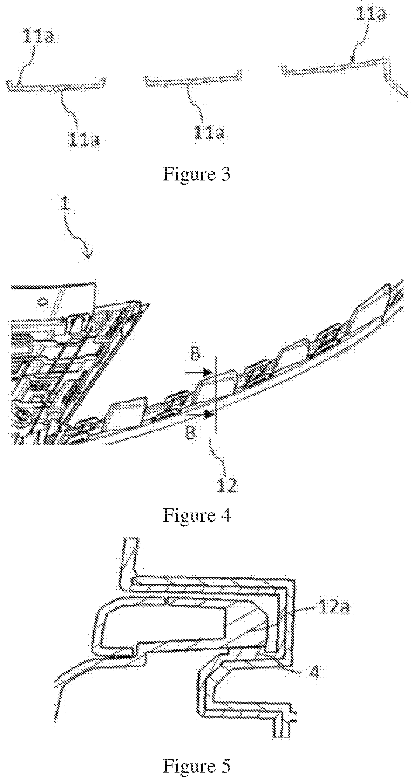

When the stiffness of the middle region of the bumper 1 is insufficient, since the side trims 31 and 33 are installed on the bumper 1, the left side trim 31 and the right side trim 33 will turn with the bumper 1, thus causing the problem of matching between the middle trim 32 and the side trims. To solve this problem, as shown in Figure 2, the bumper 1 of the invention has a convex and concave structure in the middle region 11, to increase the stiffness of the middle region 11. Figure 3 is a sectional view along Line A-A of Figure 2. The convex and concave structure is provided with a plurality of ribs 11a extending outwardly from the base surface. The ribs are provided on different locations according to needs.

To further enhance the stiffness of the bumper 1, as shown in Figure 4, the bumper 1 according to the invention is provided with a support structure in a headlight region 12. Figure 5 is a sectional view along Line B-B of Figure 4. The support structure is provided with embossments 12a extending outwardly from the base surface. The embossments 12a can be shelved upon the headlight 4 so as to support the bumper 1 in the vertical direction (Direction Z), thus preventing the bumper 1 from causing the problem of matching with the middle trim 32 and with the headlight 4 by dragging side trims 31 and 33 to turn and sink.

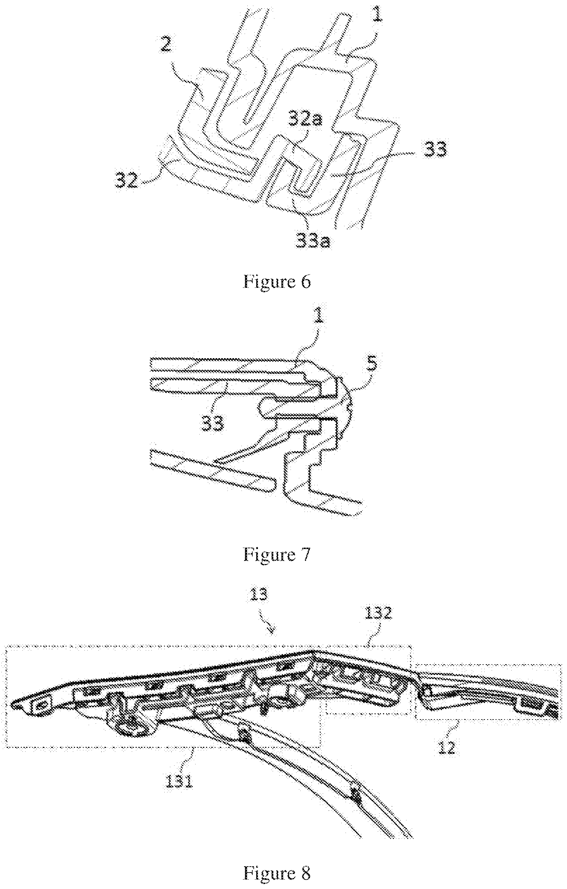

In the present embodiment, the middle trim 32 is provided with middle trim snaps 32a at its ends, and side trim snaps that engage with the middle trim snaps 32a are formed on the end of the side trims (the left side trim 31 and the right side trim 33) adjacent to the middle trim 32. Figure 6 is a schematic view of the structure of connection between the middle trim 32 and the right side trim 33, which shows the side trim snaps 33a of the right side trim 33. Thanks to the interaction between the middle trim snaps 32a and the side trim snaps 33a, a stable matching between the middle trim 32 and the side trims 31 and 33 is guaranteed.

In the present embodiment, the side trims 31 and 33 are fixedly connected at an end to the bumper 1 through a screw. Figure 7 is a schematic view of the structure of connection between the bumper 1 and the right side trim 33, in which is shown that the bumper 1 and the right side trim 33 are fixedly connected by a screw 5, to prevent side trims 31 and 33 from prolapsing from the ends during thermal deformation or while under a force.

Figure 8 is a schematic view of an end region 13 of the bumper of Figure 1. The end region 13 comprises a side region 131 and a corner region 132, wherein, the side region 131 is the free end of the bumper, and the corner region 132 is arranged between the side region 131 and the headlight region 12. In the present embodiment, the corner region 132 is configured to be a region with reduced stiffness, so that the region forms a region for stress releasing.

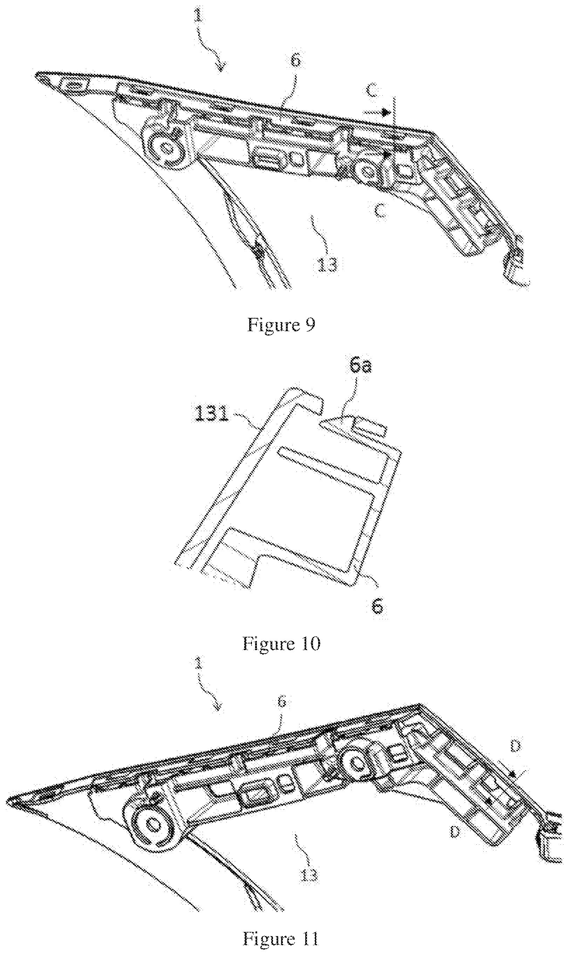

Figure 9 is a schematic view from a different angle of the end region 13 of Figure 8. The bumper assembly with a pass-through trim strip according to the invention is also provided with a side bracket 6, the side bracket 6 being fixed to the end region 13 through a side bracket mounting structure. Figure 10 is a sectional view along Line C-C of Figure 9. The bumper 1 is provided with a side bracket opening on a flange of the side region 131 adjacent to the corner region 132. The side bracket 6 is provided with a snap 6a, the snap 6a engaging with the side bracket opening so as to prevent stresses from being transferred to the side region 131.

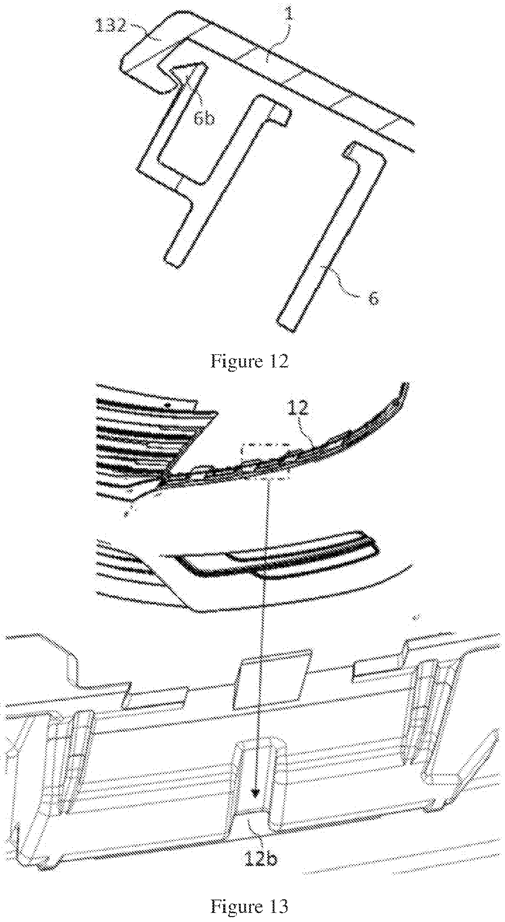

Figure 11 is a schematic view from yet another angle of the end region 13 of Figure 8. Figure 12 is a sectional view along Line D-D of Figure 11. The bumper 1 is provided with a slot on a flange of the corner region 132 adjacent to the headlight region 12. The side bracket 6 is provided a snap 6b, the snap 6b being accommodated in the slot and maintained with a gap from the slot so as to control an excessive deformation of the corner region 132 (i.e., the region for stress releasing) to prevent appearance defects due to excessive deformation.

In another embodiment of the invention, since the end region 13 is too short, it may occur that it is impossible for the bumper 1 to be provided with the side bracket opening and the slot as in the preceding embodiment, and therefore it is impossible to successfully release stresses in the corner region 132. In this case, the present embodiment provides an alternative as shown in Figure 13. The bumper 1 is provided with a groove 12b in the headlight region 12, so as to weaken the stiffness against deformation of the bumper 1 in a region under the headlight, to achieve deformation stress releasing of the bumper 1 in the headlight region 12.

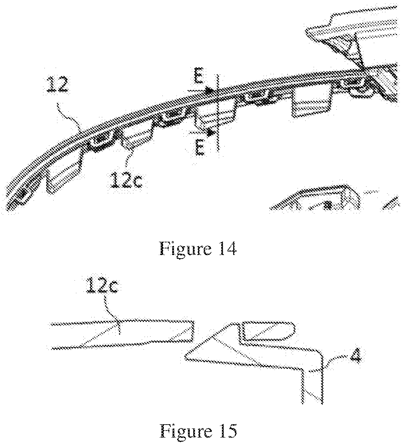

Figure 14 is a partial, enlarged view of the headlight region of Figure 13. The headlight region 12 of the bumper 1 is provided with snap-connection embossments 12c, so as to be snap-connected to the headlight 4 through the snap-connection embossments 12c (see Figure 15). Figure 15 is a sectional view along Line E-E of Figure 14, wherein, the snap-connection embossments 12c are provided with a headlight opening. A snap-connection gap of 1 mm is maintained between a snap of the headlight 4 and a wall of the headlight opening, to achieve the control of the excessive deformation of the bumper 1 in the region under the headlight, thus avoiding rupture of the pass-through trim strip 3, which has a relatively fragile stiffness.

What have been described above are only preferred embodiments of the invention, and not to limit the scope of the invention. The aforementioned embodiments of the invention can be subject to various modifications. In other words, all simple, equivalent variants and modifications that are made based on the claims and the specification of the present invention application fall within the scope of protection of the claims of the invention. What has not been described in detail in the invention belongs to conventional technologies.

## Claims

1. A bumper assembly with a pass-through trim strip, comprising a bumper (1), an upper grille (2), and a trim strip (3), wherein, the trim strip is composed of a left side trim (31), a middle trim (32), and a right side trim (33), **characterized in that**, the left- and right side trims being separate parts and the middle trim (32) is fixed to the upper grille (2) to form an upper grille assembly, said upper grille assembly being fixed to the bumper (1) through an upper grille mounting structure,
wherein the bumper (1) is provided with a convex and concave structure in a middle region (11), said convex and concave structure being provided with a plurality of ribs (11a), preferably extending outwardly from a base surface.

2. The bumper assembly with a pass-through trim strip according to claim 1, wherein the bumper (1) is provided with a support structure in a headlight region (12), said support structure being provided with support embossments (12a) extending outwardly from a base surface and being shelved upon a headlight (4).

3. The bumper assembly with a pass-through trim strip according to any one of the previous claims, wherein middle trim snaps (32a) are formed on ends of the middle trim (32), and an end of, respectively, the left side trim (31) and the right side trim (33), is provided with a side trim snap (33a), the middle trim snaps engaging with the side trim snap.

4. The bumper assembly with a pass-through trim strip according to any one of the previous claims, wherein the left side trim (31) and the right side trim (33) are, respectively, fixedly connected to the bumper (1) at an end through a screw (5).

5. The bumper assembly with a pass-through trim strip according to any one of the previous claims, wherein an end region (13) of the bumper (1) comprises a side region (131) and a corner region (132), and wherein, the side region (131) is a free end of the bumper, while the corner region (132) is arranged between the side region (131) and a headlight region (12), said corner region (132) being configured to be a region with weakened stiffness so as to form a region for stress releasing.

6. The bumper assembly with a pass-through trim strip according to the previous claim, wherein the bumper assembly with a pass-through trim strip further comprises a side bracket (6), the side bracket being fixed to the end region (13) through a side bracket mounting structure.

7. The bumper assembly with a pass-through trim strip according to the previous claim, wherein the bumper (1) is provided with a side bracket opening on a flange of the side region (131) adjacent to the corner region (132), and the side bracket (6) is provided with a snap (6a), the snap (6a) engaging with the side bracket opening.

8. The bumper assembly with a pass-through trim strip according to any one of claims 6-7, wherein the bumper (1) is provided with a slot on a flange of the corner region (132) adjacent to the headlight region (12), and the side bracket (6) is provided with a snap (6b), the snap (6b) being accommodated in the slot and maintained with a gap from the slot.

9. The bumper assembly with a pass-through trim strip according to claim 2, wherein the headlight region (12) of the bumper is provided with grooves (12b) so as to be configured as a region with reduced stiffness and to form a region for stress releasing.

10. The bumper assembly with a pass-through trim strip according to the previous claim, wherein the headlight region (12) is provided with snap-connection embossments (12c) for connecting the headlight (4), the snap-connection embossments (12c) comprising a headlight opening, and a snap of the headlight being maintained with a snap-connection gap from a wall of the headlight opening.

## Patentansprüche

1. Stoßfängeranordnung mit einer Durchgangszierleiste, die einen Stoßfänger (1), ein oberes Gitter (2) und eine Zierleiste (3) umfasst, wobei die Zierleiste aus einer linken Seitenzierleiste (31), einer mittleren Zierleiste (32) und einer rechten Seitenzierleiste (33) besteht, **dadurch gekennzeichnet, dass** die linke und die rechte Seitenzierleiste separate Teile sind und die mittlere Zierleiste (32) an dem oberen Gitter (2) befestigt ist, um eine obere Gitteranordnung zu bilden, die obere Kühlergrillanordnung an dem Stoßfänger (1) durch eine obere Kühlergrillbefestigungsstruktur befestigt ist, wobei der Stoßfänger (1) mit einer konvexen und konkaven Struktur in einem mittleren Bereich (11) versehen ist, wobei die konvexe und konkave Struktur mit einer Vielzahl von Rippen (11a) versehen ist, die sich vorzugsweise von einer Basisfläche nach außen erstrecken.

2. Stoßfängeranordnung mit einer Durchgangszierleiste nach Anspruch 1, wobei der Stoßfänger (1) in einem Scheinwerferbereich (12) mit einer Stützstruktur versehen ist, die mit von einer Grundfläche nach außen ragenden Stützprägungen (12a) versehen ist und auf einem Scheinwerfer (4) abgestellt ist.

3. Stoßfängeranordnung mit einer Durchgangszierleiste nach einem der vorhergehenden Ansprüche, wobei an den Enden der mittleren Zierleiste (32) Mittelzierleistenschnapper (32a) ausgebildet sind und jeweils ein Ende der linken Seitenzierleiste (31) und der rechten Seitenzierleiste (33) mit einem Seitenzierleistenschnapper (33a) versehen ist, wobei die Mittelzierleistenschnapper in den Seitenzierleistenschnapper eingreifen.

4. Stoßfängeranordnung mit einer Durchgangszierleiste nach einem der vorhergehenden Ansprüche, wobei die linke Seitenzierleiste (31) und die rechte Seitenzierleiste (33) jeweils an einem Ende durch eine Schraube (5) fest mit dem Stoßfänger (1) verbunden sind.

5. Stoßfängeranordnung mit einer Durchgangszierleiste nach einem der vorhergehenden Ansprüche, wobei ein Endbereich (13) des Stoßfängers (1) einen Seitenbereich (131) und einen Eckbereich (132) aufweist, und wobei der Seitenbereich (131) ein freies Ende des Stoßfängers ist, während der Eckbereich (132) zwischen dem Seitenbereich (131) und einem Scheinwerferbereich (12) angeordnet ist, wobei der Eckbereich (132) so konfiguriert ist, dass er ein Bereich mit einer geschwächten Steifigkeit ist, um einen Bereich zum Spannungsabbau zu bilden.

6. Stoßfängeranordnung mit einer Durchgangszierleiste gemäß dem vorhergehenden Anspruch, wobei die Stoßfängeranordnung mit einer Durchgangszierleiste ferner eine Seitenhalterung (6) aufweist, wobei die Seitenhalterung an dem Endbereich (13) durch eine Seitenhalterungsbefestigungsstruktur befestigt ist.

7. Stoßfängeranordnung mit einer Durchgangszierleiste nach dem vorhergehenden Anspruch, wobei der Stoßfänger (1) mit einer Seitenhalteröffnung an einer Seite des Seitenbereichs (131) neben dem Eckbereich (132) versehen ist und die Seitenhalterung (6) mit einem Schnapper (6a) versehen ist, wobei der Schnapper (6a) in die Seitenhalteröffnung eingreift.

8. Stoßfängeranordnung mit einer Durchgangszierleiste nach einem der Ansprüche 6-7, wobei der Stoßfänger (1) mit einem Schlitz an einem Flansch des Eckbereichs (132) angrenzend an den Scheinwerferbereich (12) versehen ist und die Seitenhalterung (6) mit einem Schnapper (6b) versehen ist, wobei der Schnapper (6b) in dem Schlitz untergebracht ist und mit einem Spalt zum Schlitz gehalten wird.

9. Stoßfängeranordnung mit einer Durchgangszierleiste nach Anspruch 2, wobei der Scheinwerferbereich (12) des Stoßfängers mit Nuten (12b) versehen ist, um als Bereich mit reduzierter Steifigkeit ausgebildet zu sein und einen Bereich zum Spannungsabbau zu bilden.

10. Stoßfängeranordnung mit einer Durchgangszierleiste nach dem vorhergehenden Anspruch, wobei der Scheinwerferbereich (12) mit Schnappverbindungsprägungen (12c) zum Verbinden des Scheinwerfers (4) versehen ist, wobei die Schnappverbindungsprägungen (12c) eine Scheinwerferöffnung aufweisen und ein Schnapper des Scheinwerfers mit einem Schnappverbindungsspalt von einer Wand der Scheinwerferöffnung gehalten wird.

## Revendications

1. Ensemble de pare-chocs avec une bande de garniture traversante, comprenant un pare-chocs (1), une grille supérieure (2) et une bande de garniture (3), dans lequel la bande de garniture est composée d'une garniture latérale gauche (31), une garniture médiane (32) et une garniture latérale droite (33), **caractérisées en ce que** les garnitures latérales gauche et droite étant des pièces séparées, et la garniture médiane (32) est fixée à la grille supérieure (2) pour former un ensemble de grille supérieur, ledit ensemble de grille supérieur étant fixé au pare-chocs (1) par une structure de montage de grille supérieure, dans lequel le pare-chocs (1) est pourvu d'une structure convexe et concave dans une région médiane (11), ladite structure convexe et concave étant pourvue d'une pluralité de nervures (11a), s'étendant de préférence vers l'extérieur à partir d'une surface de base.

2. Ensemble de pare-chocs avec une bande de garniture traversante selon la revendication 1, dans lequel le pare-chocs (1) est pourvu d'une structure de support dans une région de phare (12), ladite structure de support étant pourvue de reliefs de support (12a) s'étendant vers l'extérieur à partir d'une surface de base et étant disposé sur un phare (4).

3. Ensemble de pare-chocs avec une bande de garniture traversante selon l'une quelconque des revendications précédentes, dans lequel des encliquetages de garniture médiane (32a) sont formés aux extrémités de la garniture médiane (32), et une extrémité, respectivement, de la garniture latérale gauche (31) et la garniture latérale droite (33), est pourvue d'un encliquetage de garniture latérale (33a), les encliquetages de garniture médiane s'engageant avec l' encliquetage de garniture latérale.

4. Ensemble de pare-chocs avec une bande de garniture traversante selon l'une quelconque des revendications précédentes, dans lequel la garniture latérale gauche (31) et la garniture latérale droite (33) sont, respectivement, reliées fixement au pare-chocs (1) en une extrémité par une vis (5).

5. Ensemble de pare-chocs avec une bande de garniture traversante selon l'une quelconque des revendications précédentes, dans lequel une région d'extrémité (13) du pare-chocs (1) comprend une région latérale (131) et une région d'angle (132), et dans lequel la région latérale (131) est une extrémité libre du pare-chocs, tandis que la région d'angle (132) est agencée entre la région latérale (131) et une région de phare (12), ladite région d'angle (132) étant configurée pour être une région avec une rigidité affaiblie de manière à former une région pour la libération des contraintes.

6. Ensemble de pare-chocs avec une bande de garniture traversante selon la revendication précédente, dans lequel l'ensemble de pare-chocs avec une bande de garniture traversante comprend en outre un support latéral (6), le support latéral étant fixé à la région d'extrémité (13) par une structure de montage de support latéral.

7. Ensemble de pare-chocs avec une bande de garniture traversante selon la revendication précédente, dans lequel le pare-chocs (1) est pourvu d'un support latéral ouvrant sur un rebord de la région latérale (131) adjacente à la région d'angle (132), et le support latéral (6) est pourvu d'un encliquetage (6a), l' encliquetage (6a) s'engageant avec l'ouverture du support latéral.

8. Ensemble de pare-chocs avec une bande de garniture traversante selon l'une quelconque des revendications 6 à 7, dans lequel le pare-chocs (1) est pourvu d'une fente sur un rebord de la région d'angle (132) adjacente à la région de phare (12), et le support latéral (6) est pourvu d'un encliquetage (6b), l' encliquetage (6b) étant logé dans la fente et maintenu avec un espace par rapport à la fente.

9. Ensemble de pare-chocs avec une bande de garniture traversante selon la revendication 2, dans lequel la région de phare (12) du pare-chocs est pourvue de rainures (12b) de manière à être configurée comme une région à rigidité réduite et à former une région pour la libération des contraintes.

10. Ensemble de pare-chocs avec une bande de garniture traversante selon la revendication précédente, dans lequel la région de phare (12) est pourvue de reliefs de connexion par encliquetage (12c) pour connecter le phare (4), les reliefs de connexion par encliquetage (12c) comprenant une ouverture de phare, et un encliquetage du phare étant maintenu avec un espace de connexion par encliquetage à partir d'une paroi de l'ouverture de phare.
